# EUROPEAN PATENT APPLICATION

(11) **EP 3 597 546 A1**
(43) Date of publication of application: **22.01.2020**
(21) Application number: 19184142.8
(22) Date of filing: 03.07.2019
(51) Int. Cl.: B64F 5/10, B64C 1/18, B64C 1/06

(54) **MODULAR CABIN FLOOR INSTALLATION**

(30) Priority: 19.07.2018 US 201816039968
(71) Applicant: Airbus Americas, Inc., Mobile, AL 36615 (US)
(72) Inventor: GARDNER, Kenneth, Bristol BS34 7PA (GB)
(74) Representative: Worthington, Richard Easton

(57) **Abstract**

A method and apparatus for installing an aircraft cabin floor module (16) inside an aircraft fuselage (12) is disclosed. The cabin floor module is attached to the fuselage with a plurality of linkages (94) having a spherical bearing at each end to allow for the alignment and adjustment of the cabin floor module, and a second joint which includes a lug (34) having a double eccentric bushing (108) which will allow fastening apertures at a second interface point to line up with precision.

## Description

### TECHNICAL FIELD

The disclosure is related to an apparatus and a method of assembling components and, more specifically, to an apparatus and method of installing an aircraft cabin floor module within an aircraft fuselage.

### BACKGROUND

The "background" description provided herein is for the purpose of generally presenting the context of the disclosure. Work of the presently named inventor, to the extent it is described in this background section, as well as aspects of the description which may not otherwise qualify as prior art at the time of filing, are neither expressly or impliedly admitted as prior art against the present invention.

Cabin floors for aircraft and, more specifically, cabin floors for large commercial aircraft, are typically assembled and installed inside the aircraft fuselage. That is, the cabin floor is an integral part of the fuselage structure, constructed component by component inside the fuselage, using conventional manufacturing processes. This process requires manufacturing the cabin floor and the fuselage at the same location and the same time.

The process also requires high dimensional accuracy of the components, as well as drilling parts at the time of assembly at many interfaces. The floor installation may also require the installation of mechanical and electrical system components within the cabin floor, adding to the difficulty and complexity of the cabin floor installation.

However, there may be advantages to building the cabin floor and fuselage at separate manufacturing locations, and assembling them together at yet another manufacturing site. Manufacturing and installing the aircraft cabin floor in modular form, as separate units, would avoid having to build the aircraft cabin floor piece-by-piece inside the fuselage.

Another benefit of manufacturing the aircraft cabin floor in modular form is the option to put all the aircraft mechanical and electrical systems in the cabin floor prior to installation inside the aircraft fuselage. The key aspect is the ability to build the cabin floor separately and attach it to the fuselage.

During the aircraft manufacturing process, whether it is the aircraft cabin floor, or other large aircraft components, assembling and installing the components typically requires high dimensional accuracy of the components. However, manufacturing such large components which can meet the high dimensional accuracy is expensive and difficult to achieve.

Therefore, there is a need for an aircraft cabin floor module which can be manufactured separately from the fuselage, with minimal number of interface points, and a mechanism that reduces the need for high dimensional accuracy of the components.

### SUMMARY

According to an aspect of the present invention, the invention may be embodied as a method of installing a plurality of aircraft cabin floor modules within the interior of an aircraft fuselage to form the cabin floor in its entirety without requiring high dimensional accuracy of the modules. The cabin floor modules can be manufactured as separate components and installed within the aircraft fuselage with minimal number of interfaces, and the capability to adjust and align each cabin floor module to meet the interfaces on the inside of the fuselage. The cabin floor modules may be installed using a plurality of linkage joints having spherical bearings and each functioning as a first joint to support the cabin floor module in the vertical direction but allow it to move and align in the inboard-outboard and forward-aft directions within the fuselage. A plurality of second lug-clevis joints may constrain the movement of the cabin floor module in the inboard-outboard and forward-aft directions. Each lug may comprise a double eccentric bushing to allow for the proper alignment of the second lug-clevis joint. The spherical bearings at each linkage joint may align and constrain the cabin floor module in one direction, and the lug-clevis joints may align and constrain the module in the two remaining directions.

This method of installing and assembling the plurality of aircraft floor modules within the aircraft fuselage requires minimal number of interface points, with relatively low dimensional accuracy requirements, and no drill-on-assembly interfaces.

According to an aspect of the present invention, the invention is also embodied as a plurality of cabin floor modules that can be manufactured separately and installed within the aircraft fuselage side-by-side to form the whole cabin floor, without the need of high dimensional accuracy.

The modules may be manufactured separately and moved into place for final joining. The cabin floor module may utilize lateral beams, in the inboard-outboard direction, as primary load carrying structural members.

The fuselage module may utilize circumferential frames as primary load carrying structural members.

The beams and frames may be spaced so that the beams and frames align when the separate cabin floor modules are secured together.

The first joint may include a linkage having a spherical bearing at each end, which allow the joint to react to loads in the vertical direction and allow the floor to move in the inboard-outboard and forward-aft directions. The joint may allow for an interface misalignment in the inboard-outboard and forward-aft directions because the impact is minimized by the swinging linkage.

A second joint may attach the beam to the adjacent frame via a double eccentric bushing. The joint may reacts loads in the horizontal plane, completely constraining the floor. It may also allow for significant interface misalignments in the horizontal plane and vertical direction.

According to an aspect of the present invention, there is provided a method of installing a cabin floor module within an aircraft fuselage, comprising: providing a first joint; providing a second joint attached to an interior of the aircraft fuselage at one end and having an attachment point at a second end; attaching the cabin floor module to an interior of the aircraft fuselage at a first attachment point using the first joint; aligning the cabin floor module so that a second attachment point on the cabin floor module is aligned with the second end attachment point of the second joint; and attaching and securing the cabin floor module at the second joint.

The first joint may comprise a linkage having a first clevis and an opposing second clevis.

The second joint may comprise a connector, the method further including attaching the connector to the interior of the aircraft fuselage, and wherein the connector comprises a clevis extending therefrom.

The aircraft may further comprise providing a double eccentric bushing operably disposed within the lug of the connector.

The method may further comprise providing a spherical bearing within the first lug, and providing a second spherical bearing within the second lug.

The method may further comprise providing a circumferential frame within the aircraft fuselage, and attaching the connector to the circumferential frame on the interior of the aircraft fuselage.

The method may further comprise providing a bracket having a lug extending from a peripheral edge therefrom, and attaching the bracket to the circumferential frame on the interior of the aircraft fuselage.

The cabin floor module may comprise a plurality of beams each having a lower lug and an upper lug at each end. Each of the lower lug and the upper lug may include an aperture extending therethrough

The method may further comprise providing a linkage having a first clevis and a second clevis; attaching the first clevis of the linkage to the lug of the bracket; and attaching the second clevis of the linkage to the lower lug of the beam. The method may further comprise extending a bolt through the apertures of the first clevis and second clevis and securing the cabin floor module at the first joint.

The method may further comprise aligning the cabin floor module in an inboard-outboard direction so that the upper lug of each beam is aligned with apertures of the clevis of the connector.

An aperture in the upper lug may be aligned with apertures in the clevis of the connector. The method may further comprise: inserting a double eccentric bushing within the aperture of the upper lug; rotating outer and inner bushings of the double eccentric bushing so that the apertures through the bushings are aligned with the apertures of the clevis of the connector; and inserting a pin therethrough to secure the cabin floor module.

The method may further comprise aligning and moving the cabin floor module in an inboard-outboard direction while the cabin floor module is attached to the interior of the aircraft fuselage with the linkage.

The method may further comprise installing a plurality of cabin floor modules adjacent one another within the aircraft fuselage and forming the cabin floor of the aircraft.

According to an aspect of the present invention, there is provided an aircraft, comprising: a fuselage; a cabin floor module; a first joint for attaching the cabin floor module to the fuselage and supporting the cabin floor module vertically, wherein the first joint is configured to allow the cabin floor module to move in an inboard-outboard direction; a second joint for attaching the cabin floor module to the fuselage; and, wherein the second joint constrains the cabin floor module from moving in a forward-aft direction within the fuselage.

The cabin floor module may comprise a plurality of beams, each beam comprising a first lug and a second lug at each end. The first lug may include an aperture in a first direction, and the second lug may include an aperture in a second direction, wherein the first direction is transverse to the second direction.

The first joint may comprise a linkage having a first clevis at one end and a second clevis at an opposing end, wherein a spherical bearing is positioned within the first clevis and a second spherical bearing is positioned within the second clevis, the first clevis being pivotally attached to a lug on the fuselage, and the second clevis being pivotally attached to a lug on the beam.

The second joint may comprise a connector attached to the fuselage and having a clevis at one end, and a double-eccentric bushing operably positioned within the clevis which is configured to substantially align the aperture of the second lug with the apertures of the clevis so that a bolt can be passed through.

### BRIEF DESCRIPTION OF THE DRAWINGS

For an understanding of embodiments of the disclosure, reference is now made to the following description taken in conjunction with the accompanying drawings, in which:
Figure 1 is a perspective view of an aircraft;
Figure 2 is a perspective view of an aircraft cabin floor module prior to installation within the aircraft fuselage;
Figure 3 is an enlarged view of the structural frame section inside the aircraft fuselage shown in Figure 2;
Figure 4 is an enlarged view of the aircraft cabin floor module shown in Figure 2;

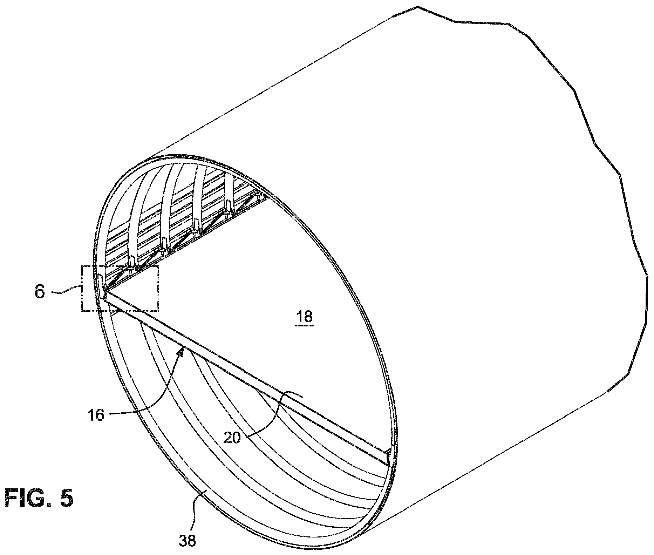

Figure 5 is a perspective view of an aircraft cabin floor module as installed within the aircraft fuselage;
Figure 6 is an enlarged view of the aircraft cabin floor module as installed shown in Figure 5 and further includes the installation of the linkages;
Figure 7 is a side sectional view of the cabin floor module shown in the configuration of Figure 6;
Figure 8 is the sectional view of the cabin floor module pivoted in the inboard direction;
Figure 9 is a sectional view taken along line 9-9 in Figure 6;
Figure 10 is a sectional view taken along line 9-9 in Figure 6 showing the slight movement in the aft direction;
Figure 11 illustrates the lateral misalignment of the cabin floor module in the inboard direction, an exaggeration of the concept shown in Figure 8; and,
Figure 12 illustrates a double eccentric bushing.

### DETAIL DESCRIPTION OF SOME EMBODIMENTS

Some embodiments will now be described with reference to the Figures, like numerals being used to refer to like and corresponding parts of the various drawings.

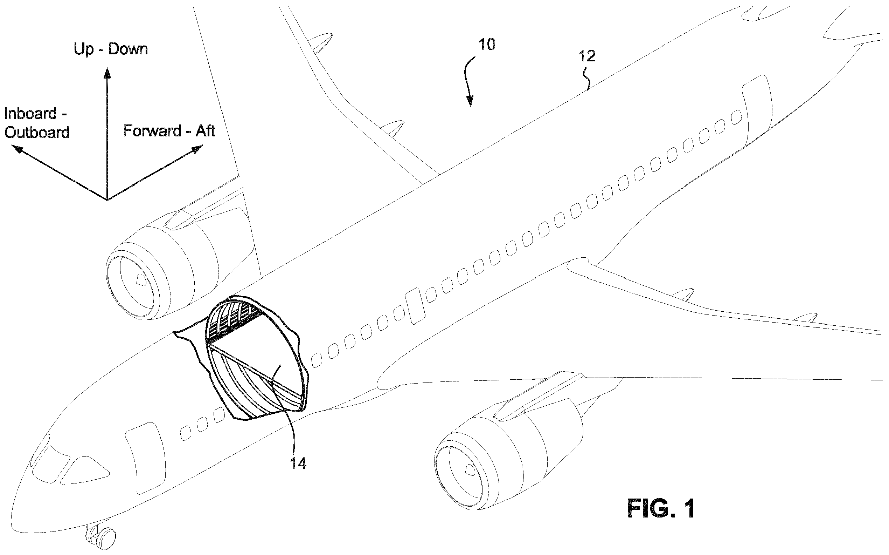

Referring now to Figure 1, a commercial, fixed wing, passenger aircraft 10 is illustrated having a fuselage 12 extending along a forward-aft direction of the aircraft. The fuselage 12 is a substantially tubular structure having a symmetrical circular cross section, although other shapes and configurations, such as but not limited to, oval or ovoid are contemplated to be within the scope of the disclosure. As best seen from the cut out section in Figure 1, the aircraft 10 includes a cabin floor 14 installed within the aircraft fuselage 12. The cabin floor 14 spans the width or diameter of the fuselage 12 and is secured to the inner wall of the fuselage 12 along a peripheral edge of the cabin floor 14 using fasteners.

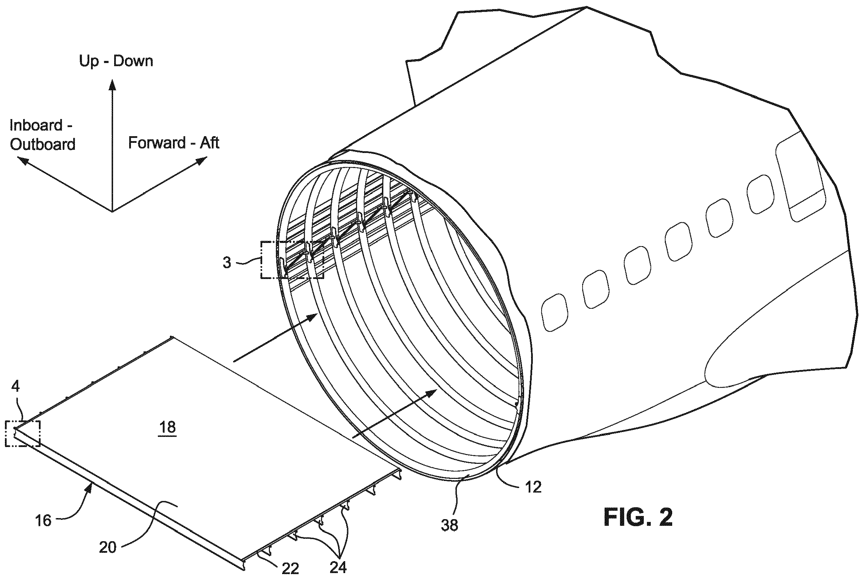

Referring to Figure 2, it is noted that the inboard-outboard direction is generally defined in the spanwise direction. The forward-aft direction is generally defined along the central axis of the fuselage 12. The up-down (vertical) direction is perpendicular to the cabin floor 14. The horizontal plane is defined as coincident to the inboard-outboard and forward-aft directions. The cabin floor 14 is parallel to the horizontal plane.

An aircraft cabin floor module 16 is illustrated in Figure 2 prior to installation within the fuselage 12. The aircraft cabin floor module 16 is manufactured separately in modular form, in its entirety prior to being placed inside, and installed within, the aircraft fuselage 12. Multiple aircraft cabin floor modules may be assembled and attached together in order to create the whole aircraft cabin floor. For example, the entire cabin floor may comprise six (6) separate aircraft cabin floor modules 16. Each aircraft cabin floor module 16 may include electrical and mechanical system components, which are housed within or attached to the cabin floor module 16, prior to installation. The aircraft cabin floor modules 16 may be attached to one another end-to-end and extend the length of the aircraft along the forward-aft direction in order to create the cabin floor.

One of the aspects of the present invention is to have a minimum number of interfaces between the cabin floor module 16 and fuselage 12, with low dimensional accuracy requirements. This will allow each aircraft cabin floor module 16 to be manufactured completely and independently, for example, at a separate manufacturing facility, with the cabin floor panel 18, the beams 24, electrical and mechanical systems, and all the other components that are commonly installed within an aircraft cabin floor.

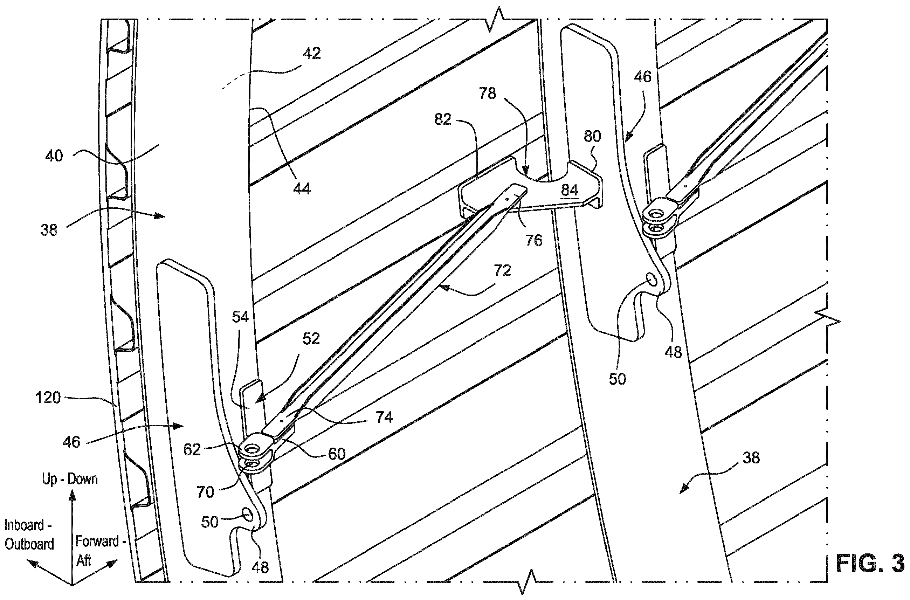

Referring to Figure 3, the aircraft fuselage 12 may include a plurality of circumferential frames 38 functioning as primary load carrying structural members. Each circumferential frame 38 may be one or multiple pieces spanning the whole inner diameter of the fuselage 12.

The beams 24 and circumferential frames 38 may be equally spaced apart from one another and, as will be explained in greater detail herein, will be aligned with one another when each cabin floor module 16 is installed. Each circumferential frame 38 includes a forward surface 40, an aft surface 42, and an inboard surface 44. A fuselage skin 120 forms the outer surface of the fuselage assembly.

A bracket 46 includes a lug 48 along a peripheral inboard edge. The lug 48 includes an aperture 50. The bracket 46 is attached to the forward surface 40 of the circumferential frame 38 so that the lug 48 extends beyond the inboard surface 44 in the inboard-outboard direction. It is noted that the bracket 46 may be integrally formed with a portion of the circumferential frame 38 or may be a separate component. The aperture 50 extends through the lug 48 in the forward-aft direction, as seen in Figure 3, and is configured to receive a spherical bearing.

A connector 52 includes a base plate 54 which mates with the inboard surface 44 of the corresponding circumferential frame 38. The connector 52 may be integrally formed with the circumferential frame 38 or may be a separate component which is attached to the circumferential frame 38 by fasteners. The connector 52 includes a lateral extension 60. The opposing end of the lateral extension 60 includes a clevis 62 with an aperture 70 that extends through both upper and lower parts of the clevis. The connector 52 may be integrally formed with the clevis 62 as a single component.

A fixed length strut 72 includes a first end 74 and a second end 76. The first end 74 is attached to the lateral extension 60 of the connector 52 by fasteners. Once each aircraft cabin floor module 16 is installed, each fixed length strut 72 functions to transfer load to the respective adjacent fuselage circumferential frame 38 and fuselage skin 120. The struts support the cabin floor module 16 under acceleration loads in the forward-aft direction.

A second bracket 78, depicted as a 90-degree bracket, includes a supporting foot 80 at one end, a second supporting foot 82 at an opposite end connected to the first supporting foot 80 by a web 84. The first supporting foot 80 is fastened to an outer face of the bracket 46. If the bracket 46 is integrally formed with the circumferential frame 38, then the first supporting foot 80 is attached to the forward surface 40 of the circumferential frame 38. The second supporting foot 82 is attached to a portion of the inner surface of the fuselage skin 120. The second end 76 of the fixed length strut 72 is fastened to the web 84.

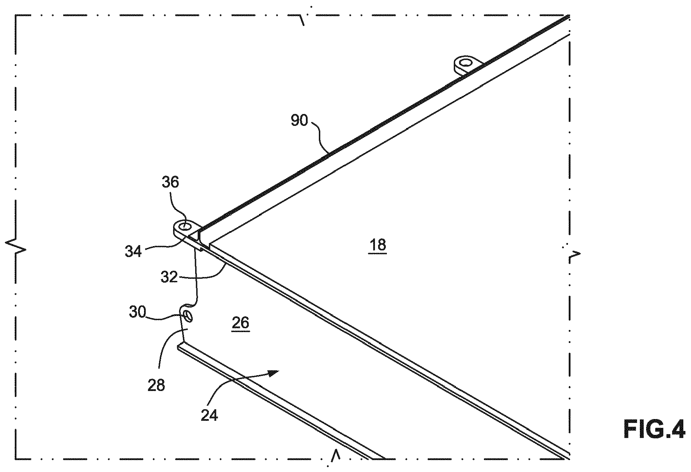

Referring to Figure 4, each aircraft cabin floor module 16 may include a cabin floor panel 18 having an upper surface 20 and a lower surface 22, and a plurality of beams 24 attached to the lower surface 22 and extending the width of the cabin floor panel 18 in the inboard-outboard direction. The beams 24 may be positioned symmetrically and equally spaced apart from one another.

Each beam 24 may include a web 26 having a lug 28 with an aperture 30, and an upper flange 32 with a lug 34 having an aperture 36. The opposing end of each beam 24 includes similar lugs 34 and lugs 28. The axis of the aperture 30, when the cabin floor module 16 is in the ideal position for installation, aligns with the forward-aft direction, and is configured to receive a spherical bearing. The axis of aperture 36, when the cabin floor module is in the ideal position for installation, aligns with the up-down direction and perpendicular to the axis of the aperture 30. A stiffener 90 extends along the length of the cabin floor module 16. The stiffener 90 transfers the load from beam to beam and it is attached at the end of each beam.

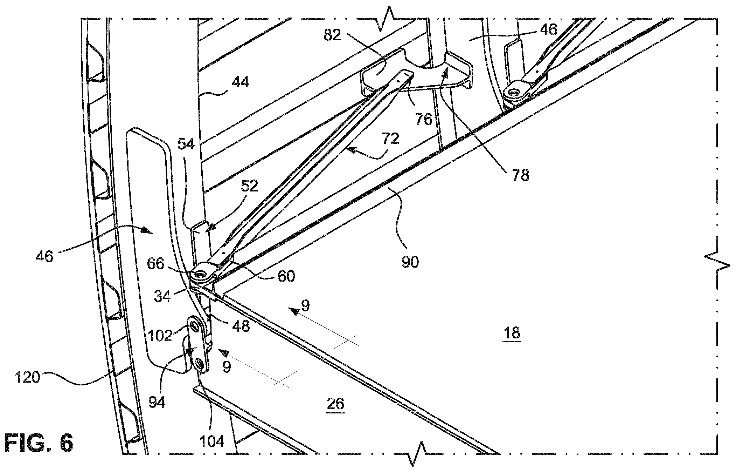

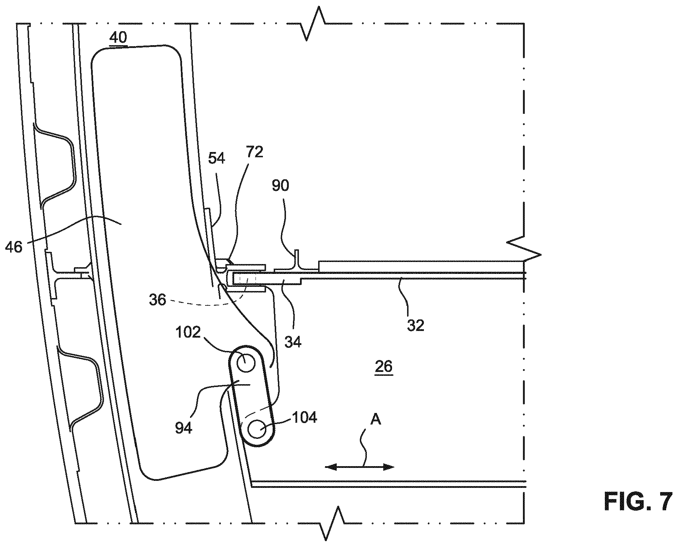

As best seen in Figures 6 and 7, at the interface between clevis 62 of connector 52 and lug 34 of beam 24, gaps are present between clevis 62 and lug 34, such that the lug 34 may move in the up-down direction without restriction from the clevis 62. It is important to note that the connector 52 is not capable of reacting loads in the up-down direction due to the clearance fit between lug 34 and clevis 62.

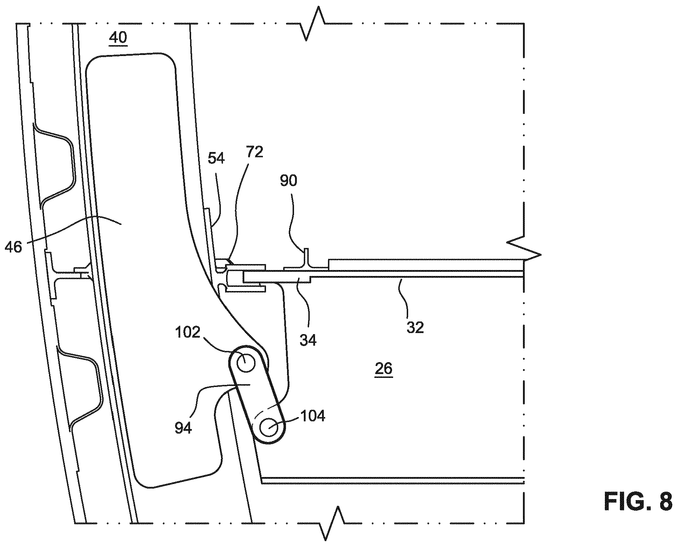

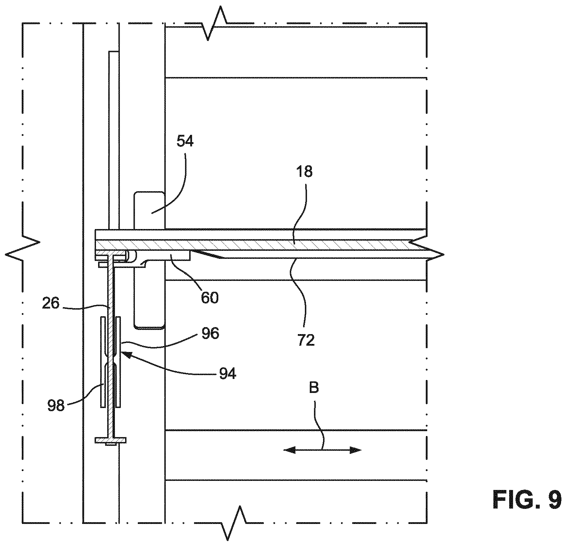

Referring now to Figures 6 to 9, each aircraft cabin floor module 16 is installed using a plurality of linkages 94. The linkages provide a joint for installing the cabin floor module 16. Each linkage 94 includes an upper clevis 96 and a lower clevis 98. The upper clevis 96 has an aperture 102 and the lower clevis 98 has an aperture 104. In the ideal position, both apertures axes are aligned with the forward-aft direction.

The lug 28 of beam 24 extends within the lower clevis 98 of the linkage 94, allowing the aperture 104 on either side to substantially align with the aperture 30 for receiving a fastener to connect the beam 24. Similarly, the lug 48 of bracket 46 extends within the upper clevis 96 of the linkage 94, allowing aperture 102 on either side to substantially line up with the aperture 50 for receiving a fastener to connect the bracket 46.

The linkages 94 are mounted by aligning the aperture 102 of the upper clevis 96 of each linkage 94 with the aperture 50 of the respective lug 48 of the bracket 46. Then aperture 104 of the lower clevis 98 is aligned with the respective aperture 30 of the lug 28 of the beam 24. Spherical bearings are integral to aperture 50 and aperture 30. A fastener is inserted through each aperture of the linkage thereby supporting the cabin floor module 16 at that specific joint. Once the linkages 94 are installed, the cabin floor module 16 is supported in the up-down direction and may be walked upon.

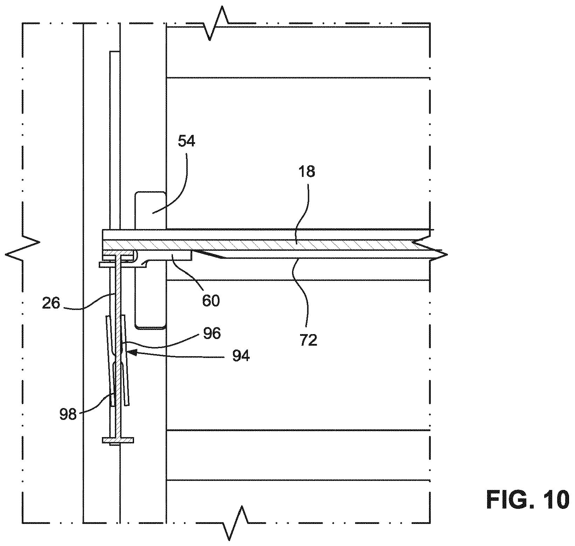

One of the key aspects of the invention is the use of spherical bearings at the aperture 50 of lug 48 and the aperture 30 of lug 28. This allows the cabin floor module 16 to pivot about each of these interfaces, and effectively translate small amounts in the horizontal plane, as demonstrated in Figures 7 to 11. Movement in the inboard-outboard direction is indicated by direction arrow A and movement in the forward-aft direction is indicated by direction arrow B. However, small translations of the cabin floor module 16 in the horizontal plane will cause a smaller translation in the up-down direction.

As a result of the ability of the linkages 94 to pivot about the upper and lower interfaces, dimensional accuracy requirements of the interfaces between the fuselage 12 and cabin floor module 16 are reduced.

To constrain the cabin floor module 16 in the horizontal plane, the floor beam lug 34 and clevis 62 are affixed. As explained above, there is a clearance fit between the lug 34 and clevis 62, ensuring that the cabin floor module 16 is constrained in the up-down direction by the linkage 94 interface rather than by the lug 34 and clevis 62 interface. This also ensures there is no lateral load transfer into the lug 34 or clevis 62.

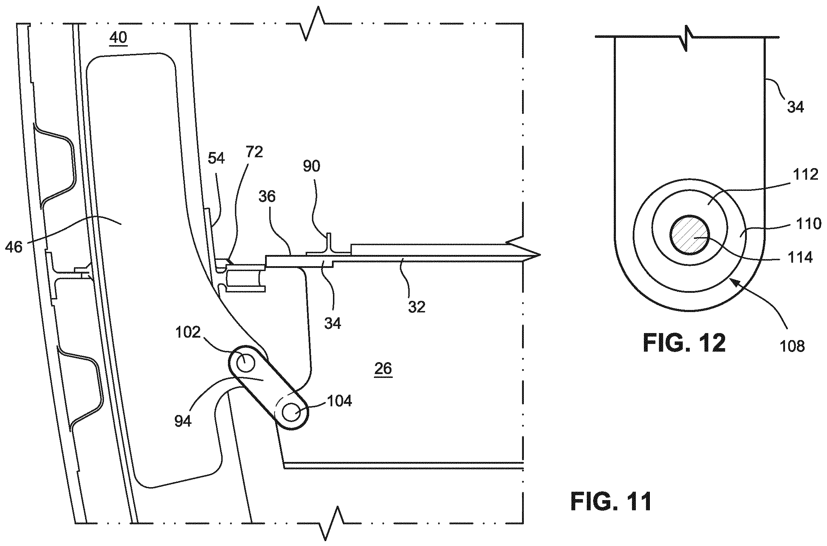

Another feature of the invention is the placement of a double-eccentric bushing 108, or other similar device for aligning hole axes, into aperture 36 of every lug 34 of each beam 24. Referring to Figure 12, a double-eccentric bushing 108 is illustrated. The double-eccentric bushing 108 includes an inner eccentric bushing 112 nested inside an outer eccentric bushing 110. Both bushings may rotate freely. A pin 114 or fastener is inserted into inner eccentric bushing 112. Any pin 114 position, in the plane of rotation, may be achieved by rotating the bushings. Upon installation, both bushing are rotated until the aperture within the inner eccentric bushing 112 aligns with the aperture 70 in the clevis 62. Once the apertures are aligned, the angular position of the bushings is fixed, and a fastener is placed into the aligned apertures.

As explained above, due to the translation of the cabin floor module 16 in the horizontal plane, the substantial alignment of aperture 36 of the lug 34 with the aperture 70 of clevis 62 is possible after the linkages 96 have been assembled. Then, prior to final securing of the clevis joint with a bolt, the precision alignment is achieved with the use of the double eccentric bushing 108 device. These alignment capabilities facilitate manufacturing the components, assemblies, and modules with low dimensional accuracy.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means "and/or" (either or both). Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

## Claims

1. A method of installing a cabin floor module (16) within an aircraft fuselage (12), comprising:
providing a first joint;
providing a second joint attached to an interior of the aircraft fuselage (12) at one end and having an attachment point at a second end;
attaching the cabin floor module (16) to an interior of the aircraft fuselage at a first attachment point using the first joint;
aligning the cabin floor module so that a second attachment point on the cabin floor module is aligned with the second end attachment point of the second joint; and
attaching and securing the cabin floor module (16) at the second joint.

2. The method of claim 1, wherein the first joint comprises a linkage (94) having a first clevis (96) and an opposing second clevis (98).

3. The method of claim 1, wherein the second joint comprises a connector (52), the method further including attaching the connector (52) to the interior of the aircraft fuselage (12), and wherein the connector (52) comprises a clevis (62) extending therefrom.

4. The method of claim 3, further comprising providing a circumferential frame (38) within the aircraft fuselage (12), and attaching the connector (52) to the circumferential frame (38) on the interior of the aircraft fuselage (12).

5. The method of claim 4, further comprising providing a bracket (46) having a lug (48) extending from a peripheral edge therefrom, and attaching the bracket (46) to the circumferential frame (38) on the interior of the aircraft fuselage (12).

6. The method claim 5, wherein the cabin floor module (16) comprises a plurality of beams (24) each having a lower lug (28) and an upper lug (34) at each end.

7. The method of claim 6, further comprising:
providing a linkage (94) having a first clevis (96) and a second clevis (98);
attaching the first clevis (96) of the linkage (94) to the lug (48) of the bracket (46); and
attaching the second clevis (98) of the linkage (94) to the lower lug (28) of the beam (24).

8. The method of claim 7, further comprising aligning the cabin floor module (16) in an inboard-outboard direction so that the upper lug (34) of each beam (24) is aligned with apertures (70) of the clevis (62) of the connector (52).

9. The method of claim 8, wherein an aperture (36) in the upper lug (34) is aligned with apertures (70) in the clevis (62) of the connector (52); the method further comprising:
inserting a double eccentric bushing (108) within the aperture (36) of the upper lug (34);
rotating outer and inner bushings (110, 112) of the double eccentric bushing (108) so that the apertures through the bushings (110, 112) are aligned with the apertures of the clevis of the connector; and
inserting a pin therethrough to secure the cabin floor module.

10. The method of claims 2 and 7 to 9, further comprising aligning and moving the cabin floor module (16) in an inboard-outboard direction while the cabin floor module (16) is attached to the interior of the aircraft fuselage with the linkage (94).

11. The method of any preceding claim, further comprising installing a plurality of cabin floor modules (16) adjacent one another within the aircraft fuselage (12) and forming the cabin floor of the aircraft.

12. An aircraft (10), comprising:
a fuselage (12);
a cabin floor module (16);
a first joint for attaching the cabin floor module (16) to the fuselage (12) and supporting the cabin floor module vertically, wherein the first joint is configured to allow the cabin floor module to move in an inboard-outboard direction;
a second joint for attaching the cabin floor module (16) to the fuselage (12); and,
wherein the second joint constrains the cabin floor module from moving in a forward-aft direction within the fuselage.

13. The aircraft (10) of claim 12, wherein the cabin floor module (16) comprises a plurality of beams (24), each beam comprising a first lug (28) and a second lug (34) at each end and, optionally, wherein the first lug (28) includes an aperture (30) in a first direction, and the second lug (34) includes an aperture (36) in a second direction, wherein the first direction is transverse to the second direction.

14. The aircraft (10) of claim 13, wherein the first joint comprises a linkage (94) having a first clevis (96) at one end and a second clevis (98) at an opposing end, wherein a spherical bearing is positioned within the first clevis and a second spherical bearing is positioned within the second clevis, the first clevis being pivotally attached to a lug (48) on the fuselage, and the second clevis being pivotally attached to a lug (28) on the beam.

15. The aircraft of claim 14, wherein the second joint comprises a connector (52) attached to the fuselage (12) and having a clevis (62) at one end, and a double-eccentric bushing (108) operably positioned within the clevis which is configured to substantially align the aperture of the second lug with the apertures of the clevis so that a bolt can be passed through.
